# FASCICULE DE BREVET EUROPEEN

(11) **EP 3 853 456 B1**
(45) Date de publication et mention de la délivrance du brevet: **26.10.2022**
(21) Numéro de dépôt: 19790681.1
(22) Date de dépôt: 20.09.2019
(51) Int. Cl.: F02C 7/36, F02K 3/04, F02C 7/06

(54) **TURBORÉACTEUR À RÉDUCTEUR**
TURBOLUFTSTRAHLTRIEBWERK MIT DREHZAHLREDUKTIONSMECHANISMUS
TURBOJET WITH STEP-DOWN MECHANISM

(30) Priorité: 21.09.2018 FR 1858584
(43) Date de publication de la demande: 28.07.2021
(73) Titulaire: SAFRAN AIRCRAFT ENGINES, 75015 Paris (FR)
(72) Inventeur: NOWAKOWSKI, Nathalie, Réau, 77550 MOISSY-CRAMAYEL (FR); CHARIER, Gilles, Alain, Marie, Réau, 77550 MOISSY-CRAMAYEL (FR); LEMARCHAND, Kévin, Morgane, Réau, 77550 MOISSY-CRAMAYEL (FR); TANTOT, Nicolas, Jérôme, Jean, Réau, 77550 MOISSY-CRAMAYEL (FR); VLASTUIN, Jonathan, Evert, Réau, 77550 MOISSY-CRAMAYEL (FR); YESILCIMEN, Henri, Réau, 77550 MOISSY-CRAMAYEL (FR)
(74) Mandataire: Cabinet Beau de Loménie
(86) Numéro de dépôt international: PCT/FR2019/052212
(87) Numéro de publication internationale: WO 2020/058653

(56) Documents cités:
- WO-A1-2015/031143
- US-A1- 2013 259 652
- US-A1- 2016 102 607
- US-A1- 2016 131 028
- US-B2- 7 882 693

## Description

### DOMAINE TECHNIQUE

Le présent exposé concerne le domaine des aéronefs, et plus particulièrement un turboréacteur pouvant être utilisé pour la propulsion aéronautique.

### ARRIÈRE-PLAN TECHNOLOGIQUE

Ces dernières années, les moteurs d'aéronefs ont connu de nombreuses améliorations, qui ont permis d'augmenter leurs performances et de diminuer significativement leur consommation en carburant et leurs émissions de gaz à effet de serre. Actuellement, les efforts nécessaires pour obtenir des gains du même ordre dans les années à venir sont proportionnellement beaucoup plus élevés. Cela implique des coûts très largement accrus, mais également une complexité croissante des systèmes mis en œuvres, si bien que l'opérabilité des moteurs et leur rapport performance/coût pourraient se détériorer.

Il existe donc un besoin pour un nouveau type de moteur d'aéronef, en particulier de turboréacteur, qui forme un compromis plus acceptable entre différents paramètres tels que la consommation spécifique, la traînée, la géométrie, la masse la simplicité et les coûts. Des turboréacteurs sont connus par les documents US7882693 et US2016102607.

### PRÉSENTATION GÉNÉRALE

A cet effet, le présent exposé concerne un turboréacteur comprenant une soufflante, un compresseur, une chambre de combustion, et une turbine configurée pour entraîner en rotation la soufflante via un premier réducteur et le compresseur via un deuxième réducteur, dans lequel une sortie du premier réducteur est couplée en rotation à une entrée du deuxième réducteur par un arbre de réduction, l'arbre de réduction étant soutenu par un palier agencé entre le premier réducteur et le deuxième réducteur.

Dans le présent exposé, on appelle axe du turboréacteur, son axe de symétrie ou quasi-symétrie, qui forme l'axe de rotation du compresseur et de la turbine. La direction axiale correspond à la direction de l'axe du turboréacteur et une direction radiale est une direction perpendiculaire à cet axe et coupant cet axe. De même, un plan axial est un plan contenant l'axe du turboréacteur et un plan radial est un plan perpendiculaire à cet axe. Une circonférence s'entend comme un cercle appartenant à un plan radial et dont le centre appartient à l'axe du turboréacteur. Une direction tangentielle ou circonférentielle est une direction tangente à une circonférence ; elle est perpendiculaire à l'axe du turboréacteur mais ne passe pas par l'axe.

Sauf précision contraire, les adjectifs avant et arrière sont utilisés en référence à la direction axiale étant entendu que l'entrée du turboréacteur est située du côté avant du turboréacteur, tandis que sa sortie est située du côté arrière. Les adjectifs amont et aval sont utilisés en référence au sens d'écoulement normal des gaz dans le turboréacteur.

Enfin, sauf précision contraire, les adjectifs intérieur (interne) et extérieur (externe) sont utilisés en référence à une direction radiale de sorte que la partie intérieure d'un élément est, suivant une direction radiale, plus proche de l'axe du turboréacteur que la partie extérieure du même élément.

Ainsi, on comprend que le palier précité peut être agencé axialement entre le premier réducteur et le deuxième réducteur. Le palier peut être soutenu par rapport à un carter fixe du turboréacteur, notamment fixe par rapport à la chambre de combustion.

Un réducteur est un dispositif permettant de modifier le rapport de vitesse ou/et le couple entre au moins une roue d'entrée et au moins une roue de sortie. Au sens du présent exposé, un réducteur peut avoir un rapport de transmission inférieur à un, mais aussi supérieur à un, selon ce qu'on considère être l'entrée ou la sortie (un réducteur est une transmission généralement réversible), auquel cas on parle parfois de multiplicateur. Comme indiqué, une sortie du premier réducteur est couplée en rotation à une entrée du deuxième réducteur par un arbre de réduction, c'est-à-dire qu'il existe une connexion fonctionnelle entre la sortie du premier réducteur et l'entrée du deuxième réducteur.

A l'opposé des développements actuels qui se fondent en très grande majorité, sinon en totalité, sur des turboréacteurs sans réducteur, le présent exposé propose de mettre en œuvre un turboréacteur avec au moins un réducteur, en l'occurrence au moins deux réducteurs. L'architecture ainsi proposée permet de simplifier grandement le turboréacteur, par exemple grâce à la suppression d'organes complexes tels qu'arbres, paliers et supports, de diminuer sa masse et son coût.

En outre, grâce au fait que l'arbre de réduction est soutenu par un palier agencé entre le premier réducteur et le deuxième réducteur, le turboréacteur présente une bonne situation dynamique, c'est-à-dire un bon comportement mécanique et aérodynamique en régime de fonctionnement, et des modes propres vibratoires principaux, c'est-à-dire dommageables pour le turboréacteur, situés hors du régime de fonctionnement. En outre, ledit palier permet de bien maintenir le premier réducteur et le deuxième réducteur, en évitant ou limitant les couplages dynamiques entre ces deux réducteurs. Par suite, le turboréacteur présente un niveau de performance comparable à celui des turboréacteurs existant par ailleurs, ou bien présente un rapport performance/coût bien meilleur qu'un turboréacteur existant.

Dans certains modes de réalisation, le palier est un palier à rouleaux. Ledit palier permet donc un mouvement axial de l'arbre de réduction.

Dans certains modes de réalisation, le turboréacteur est un turboréacteur à double flux comprenant un carter disposé en aval de la soufflante et séparant une veine primaire d'une veine secondaire, et le palier est soutenu par ledit carter.

Le turboréacteur est dit à double flux en ce qu'il comprend une veine primaire accueillant un flux primaire et une veine secondaire accueillant un flux secondaire. Le carter séparant la veine primaire et la veine secondaire est parfois appelé carter interne. Grâce au fait que le palier est soutenu par le carter interne, la structure de support du palier peut être simplifiée, ce qui limite l'augmentation de la masse du turboréacteur, simplifie sa structure générale et améliore ses performances.

Dans certains modes de réalisation, lequel ledit palier est agencé radialement à l'extérieur de l'arbre de compresseur, de l'arbre de turbine et de l'arbre de réduction. Cela permet d'optimiser encore la situation dynamique du turboréacteur.

Dans certains modes de réalisation, l'arbre de réduction est un porte-satellite commun au premier réducteur et au deuxième réducteur.

Outre les caractéristiques qui viennent d'être mentionnées, le turboréacteur proposé peut comprendre un ou plusieurs autres paliers selon les caractéristiques parmi les suivantes, considérées isolément ou selon des combinaisons techniquement possibles:
- un palier de soufflante agencé entre l'arbre de la soufflante et le carter. Le palier de soufflante soutient l'arbre de soufflante par rapport au carter ;
- un palier de compresseur agencé entre l'arbre de compresseur et le carter. Le palier de compresseur, aussi appelé premier palier de compresseur, soutient l'arbre de compresseur par rapport au carter ;
- un deuxième palier, tel qu'un palier à rouleaux, agencé pour soutenir l'arbre de réduction. Le fait d'utiliser deux paliers à rouleaux pour soutenir l'arbre de réduction évite l'hyperstatisme ;
- un palier inter-arbre, par exemple à rouleaux, agencé entre l'arbre de compresseur et l'arbre de turbine. Le palier inter-arbre peut être agencé radialement entre l'arbre de compresseur et l'arbre de turbine et soutenir ces deux arbres l'un par rapport à l'autre ;
- un palier de compresseur agencé entre l'arbre de compresseur et un organe structural en aval du compresseur, ledit organe structural pouvant être, par exemple, le carter de la chambre de combustion ou le diffuseur situé entre le compresseur et la chambre de combustion. Le palier de compresseur, aussi appelé deuxième palier de compresseur, soutient l'arbre de compresseur par rapport à l'organe structural.

Le présent exposé concerne également un turboréacteur simple corps double flux, comprenant une soufflante, un carter disposé en aval de la soufflante et séparant une veine primaire d'une veine secondaire, un compresseur, une chambre de combustion et une turbine étant agencés dans la veine primaire, le turboréacteur comprenant une transmission différentielle couplée à la turbine, dans lequel le rapport de dilution entre la veine secondaire et la veine primaire est supérieur ou égal à 12.

Comme indiqué, la transmission différentielle est couplée à la turbine, c'est-à-dire qu'il existe une connexion fonctionnelle, éventuellement permanente, entre la turbine et la transmission différentielle. La transmission différentielle peut être configurée pour entraîner la soufflante et/ou le compresseur, grâce à l'énergie mécanique fournie par la turbine. La transmission différentielle est une transmission de puissance permettant de modifier le rapport de vitesse ou/et le couple entre au moins une entrée, en l'occurrence la turbine, et au moins une sortie, en l'occurrence la soufflante et/ou le compresseur. Au sens du présent exposé, la transmission différentielle peut avoir un rapport de transmission inférieur à un, auquel cas on parle parfois de système de réduction, mais aussi supérieur à un, selon ce qu'on considère être l'entrée ou la sortie, auquel cas on parle parfois de système multiplicateur. La transmission différentielle peut être électromécanique ou purement mécanique.

Le turboréacteur peut être un turboréacteur à simple corps. Un turboréacteur à simple corps comprend un unique ensemble tournant, reliant un ou plusieurs compresseurs à une ou plusieurs turbines via une cinématique commune, ce qui ne signifie pas que tous les composants tournent au même régime mais que leurs rotations sont liées. Par opposition, un turboréacteur à double corps comprend deux ensembles tournants cinématiquement indépendants, chacun de ces ensembles reliant ses propres compresseurs et turbines via une cinématique propre et indépendante de celle de l'autre ensemble. Dans la suite, par souci de concision mais sans perte de généralité, on fera l'hypothèse que le corps simple comprend un compresseur et une turbine.

Le rapport de dilution entre la veine secondaire et la veine primaire, appelé plus simplement rapport de dilution ou en anglais *by-pass ratio* (BPR), est le rapport du débit d'air entrant dans la veine secondaire sur le débit d'air entrant dans la veine primaire. Augmenter le BPR permet d'augmenter la performance du turboréacteur, dans la mesure où la poussée est essentiellement fournie par l'air brassé par la soufflante et qui passe par la veine secondaire. Par exemple, un rapport de dilution supérieur ou égal à 12 peut être obtenu dans le cadre d'une vitesse d'éjection subsonique en sortie du turboréacteur, de préférence entre Mach 0,8 et Mach 1 au col de la tuyère d'éjection, pour une vitesse d'aéronef correspondante comprise entre Mach 0,7 et Mach 0,9.

L'augmentation du BPR nécessite toutefois d'augmenter le diamètre de la soufflante, ce qui conduit conjointement à augmenter la section de la veine secondaire.

Comme indiqué précédemment, le turboréacteur comprend une transmission différentielle formée du premier réducteur configuré pour modifier le rapport de transmission de vitesse de rotation entre la turbine et la soufflante et du deuxième réducteur configuré pour modifier le rapport de transmission de vitesse de rotation entre la turbine et le compresseur.

Ainsi, la rotation de la soufflante peut être découplée de la rotation du compresseur, ce qui permet d'avoir, pour ces deux composants, des vitesses de rotation différentes. Cela permet de maintenir la vitesse de rotation du compresseur à un certain niveau tout en diminuant la vitesse de rotation de la soufflante. Or, la vitesse de rotation de la soufflante conditionne la vitesse tangentielle de la partie radialement externe des aubes de soufflante, aussi appelée tête d'aube. La vitesse de la tête d'aube doit respecter certaines contraintes, notamment rester subsonique, par exemple inférieure ou égale à 310 mètres par seconde (m/s). Par suite, le fait de pouvoir diminuer la vitesse de rotation de la soufflante permet, à vitesse de tête d'aube égale, d'augmenter le diamètre de la soufflante. Il s'ensuit d'encore meilleures performances pour le turboréacteur.

Dans certains modes de réalisation, le premier réducteur est un réducteur différentiel ayant une roue d'entrée solidaire en rotation de la turbine, une première roue de sortie solidaire en rotation de la soufflante, une deuxième roue de sortie solidaire en rotation d'une roue d'entrée du deuxième réducteur, et le deuxième réducteur est un réducteur épicycloïdal ayant une roue de sortie solidaire en rotation du compresseur.

Un réducteur différentiel peut associer la rotation de trois roues, par exemple une roue d'entrée et deux roues de sortie, ou deux roues d'entrée et une roue de sortie. Un réducteur épicycloïdal peut associer la rotation de deux roues, par exemple une roue d'entrée et une roue de sortie.

Le réducteur différentiel et/ou le réducteur épicycloïdal peut être prévu sous la forme d'un train épicycloïdal. Un train épicycloïdal possède en général un planétaire extérieur, aussi appelé couronne, ainsi qu'un planétaire intérieur, aussi appelé planétaire ou soleil. Le planétaire et la couronne sont couplés par l'intermédiaire d'un ou plusieurs satellites, les satellites étant couplés entre eux par un porte-satellite. Au sens du présent exposé, on appelle « roue », de manière générique, l'un quelconque de la couronne, du porte-satellite ou du planétaire. Chaque roue peut être utilisée comme entrée ou sortie d'une transmission mécanique.

En l'espèce, la rotation de la turbine est transmise, via le premier réducteur, à la soufflante. Il s'ensuit un premier rapport de transmission, par exemple un premier rapport de couple, entre la turbine et la soufflante. La deuxième roue de sortie du premier réducteur entraîne une roue d'entrée du deuxième réducteur, dont la sortie entraîne le compresseur. Il s'ensuit un deuxième rapport de transmission entre la turbine et le compresseur. Ainsi, l'utilisation d'un réducteur différentiel permet de découpler la rotation de la soufflante et du compresseur. Pour limiter la complexité du turboréacteur, le réducteur épicycloïdal peut être couplé au réducteur différentiel et non directement à la turbine.

Dans certains modes de réalisation, le rapport du nombre de dents de la première roue de sortie du premier réducteur sur le nombre de dents de la roue d'entrée du premier réducteur est supérieur à 1. Ce rapport peut être supérieur à 1,2, de préférence encore supérieur à 1,4. En outre, ce rapport peut être inférieur à 1,8, de préférence encore inférieur à 1,6. Ce rapport peut être environ égal à 1,5. En cas de fonctionnement nominal, le premier réducteur est donc configuré pour fournir à la soufflante une vitesse de rotation plus faible que celle fournie au compresseur.

Dans certains modes de réalisation, le rapport du nombre de dents de la couronne du deuxième réducteur sur le nombre de dents de la roue de sortie du deuxième réducteur est supérieur à 2. Dans le cas d'un train épicycloïdal, la couronne du deuxième réducteur peut être fixe par rapport au carter interne du turboréacteur. Ce rapport permet d'augmenter la vitesse de rotation du compresseur par rapport à la vitesse fournie en entrée du deuxième réducteur par le premier réducteur. Ce rapport pour être supérieur à 5, de préférence encore supérieur à 6. En outre, ce rapport peut être inférieur à 9, de préférence encore inférieur à 8. Ce rapport peut être environ égal à 7.

Dans certains modes de réalisation, le rapport du nombre de dents de la première roue de sortie du premier réducteur sur le nombre de dents de la roue d'entrée du premier réducteur est inférieur au rapport du nombre de dents de la couronne du deuxième réducteur sur le nombre de dents de la roue de sortie du deuxième réducteur. Il s'agit du rapport des deux rapports précités ; on vérifie d'ailleurs, sur les exemples donnés, que 1,5 est inférieur à 7. Dans cette configuration, le diamètre des différentes roues de la transmission différentielle peut être diminué et le coût flobal de production de la transmission différentielle peut être limité.

Dans certains modes de réalisation, le deuxième réducteur a un rapport de transmission supérieur à 3. Le rapport de transmission est le rapport de la vitesse de rotation de la roue de sortie sur la vitesse de rotation de la roue d'entrée. Dans le cas de satellites, on considère la vitesse de rotation du porte-satellites, ce qui correspond à la vitesse de révolution des satellites autour du planétaire et non la vitesse de rotation des satellites sur eux-mêmes.

Ce rapport de transmission peut être supérieur à 6, de préférence encore supérieur à 7. En outre, ce rapport peut être inférieur à 10, de préférence encore inférieur à 9. Ce rapport peut être environ égal à 8.

Dans certains modes de réalisation, le taux de compression de la soufflante en régime de croisière est compris entre 1,3 et 1,45. Conformément à la définition usuelle, on appelle taux de compression de la soufflante le rapport de la pression totale moyennée en volume d'une masse d'air donnée en entrée de la soufflante sur la pression totale moyennée en volume de cette même masse d'air en sortie de la soufflante. Un taux de compression relativement faible permet d'augmenter les performances du turboréacteur.

Dans certains modes de réalisation, le taux de compression du compresseur est supérieur ou égal à 25 à une vitesse de rotation du compresseur de 15500 tours par minute. Un tel taux de compression est adapté à l'aérodynamique du compresseur et de la turbine. Par exemple, le compresseur peut comprendre au moins huit étages d'aubes mobiles, de préférence au moins neuf ou dix étages.

Dans certains modes de réalisation, le rapport de pression global est supérieur ou égal à 30 en haut de montée (en anglais « top of climb »). Le rapport de pression global, appelé en anglais *overall pressure ratio* ou OPR, est le rapport de la pression totale de l'air en sortie du compresseur sur la pression totale de l'air en entrée de la soufflante. Le point dit « top of climb » est le point auquel l'ascension jusqu'à l'altitude de croisière est achevée, ce point étant calculé classiquement de sorte que l'ascension soit la plus économe et courte possible. Un OPR élevé permet d'améliorer le rendement thermique, donc les performances du générateur de gaz du turboréacteur. Un OPR compris entre 30 et 40 peut paraître moins avantageux que sur des turboréacteurs à double corps, mais cela est compensé par un gain de simplicité, d'opérabilité et de coût important.

Par ailleurs, sauf indication contraire, les valeurs des grandeurs mentionnées dans le présent exposé sont mesurées lorsque le turboréacteur est stationnaire dans une atmosphère standard, telle que définie par le manuel de l'Organisation de l'aviation civile internationale (OACI), Doc 7488/3, 3^{e} édition, et au niveau de la mer.

Le présent exposé concerne également un turboréacteur double flux, comprenant une soufflante, un carter disposé en aval de la soufflante et séparant une veine primaire d'une veine secondaire, un compresseur, une chambre de combustion et une turbine étant agencés dans la veine primaire, le turboréacteur comprenant une transmission différentielle couplée à la turbine, et un dispositif d'apport de puissance configuré pour fournir une puissance additionnelle à celle fournie par la turbine pour entraîner le compresseur.

Grâce au fait que le turboréacteur comprend un dispositif d'apport de puissance configuré pour fournir une puissance additionnelle à celle fournie par la turbine pour entraîner le compresseur, il est possible, selon le régime, de faire fonctionner le compresseur dans une plage de fonctionnement souhaitée alors que la turbine seule, dans le régime considéré, notamment à bas régime, ne permettrait pas de fonctionnement dans cette plage. De ce fait, les performances du turboréacteur sont encore améliorées, quel que soit le régime de fonctionnement du turboréacteur.

Dans certains modes de réalisation, le turboréacteur comprend en outre une unité de commande configurée pour commander le dispositif d'apport de puissance en fonction d'une vitesse de rotation de la turbine. Ainsi, le dispositif d'apport de puissance peut être commandé en fonction du régime du turboréacteur. Ceci permet d'adapter finement les paramètres du turboréacteur et d'optimiser le fonctionnement du turboréacteur.

Dans certains modes de réalisation, le dispositif d'apport de puissance comprend un moteur électrique configuré pour entraîner en rotation le compresseur. Dans ces modes de réalisation, le dispositif d'apport de puissance peut être commandé de manière très souple, en fonction des besoins de puissance, notamment de manière continue sur une plage couvrant la puissance nulle jusqu'à la puissance maximale de dimensionnement du dispositif d'apport de puissance.

Dans certains modes de réalisation, le dispositif d'apport de puissance comprend un générateur électrique configuré pour être entraîné par la turbine. Le générateur électrique peut être configuré pour alimenter le moteur électrique précité, directement ou via des moyens de stockage d'électricité.

En effet, dans certains modes de réalisation, le turboréacteur comprend des moyens de stockage d'électricité électriquement connectés au moteur électrique ou au générateur électrique. Ainsi, pendant certaines phases de vol, par exemple à haut régime, la turbine peut entraîner le générateur électrique de sorte que la puissance mécanique excédentaire est stockée, sous forme électrique, dans les moyens de stockage d'électricité. Pendant d'autres phases de vol, par exemple à bas régime, le compresseur peut être entraîné par la turbine et par le moteur électrique, le moteur électrique tirant son énergie des moyens de stockage d'électricité. Cependant, d'autres variantes sont possibles. Par exemple, au lieu d'être rechargés par un générateur électrique entraîné par la turbine, les moyens de stockage d'électricité pourraient être rechargés à l'aide d'une alimentation externe au turboréacteur.

Ainsi, dans certains modes de réalisation, le dispositif d'apport de puissance comprend un connecteur configuré pour être connecté à une alimentation électrique externe.

Dans certains modes de réalisation, le dispositif d'apport de puissance comprend une transmission mécanique variable couplée d'une part à l'arbre du compresseur, d'autre part à l'arbre de la turbine. Ainsi, la transmission mécanique variable permet de soutirer à la turbine une puissance pour entraîner le compresseur, ladite puissance pouvant être régulée, par exemple en fonction du régime du turboréacteur. La transmission mécanique variable peut être connectée ou déconnectée du compresseur et/ou de la turbine. La transmission mécanique variable peut transmettre une proportion fixe ou variable de la puissance de la turbine au compresseur. La transmission mécanique variable peut comprendre l'un quelconque des éléments suivants : un embrayage, une boîte de vitesse, un variateur, etc.

Dans certains modes de réalisation, le dispositif d'apport de puissance comprend une transmission électromagnétique couplée d'une part à l'arbre du compresseur, d'autre part à l'arbre de la turbine. La transmission électromagnétique peut être, par exemple, une transmission à engrenages magnétiques. Une transmission électromagnétique présente de nombreux avantages, notamment l'absence de fatigue mécanique, de lubrification, de pertes dues aux contacts mécaniques, de bruit, ainsi qu'un rendement très élevé.

Dans certains modes de réalisation, la puissance additionnelle maximale fournie par le dispositif d'apport de puissance est supérieure à 1,5 mégawatt (MW). Une telle puissance additionnelle maximale est utile pour compenser la puissance non fournie par la turbine lors de certains régimes du turboréacteur.

Dans certains modes de réalisation, le dispositif d'apport de puissance est configuré pour être désactivé lorsque la vitesse de rotation de la turbine est supérieure à 95% de la vitesse de rotation maximale nominale de la turbine. Ainsi, il est possible de ne dimensionner le dispositif d'apport de puissance que pour un fonctionnement à des régimes mécaniques modérés où son rôle est utile, minimisant ainsi sa masse et sa complexité. Par exemple, le dispositif d'apport de puissance peut être configuré pour être désactivé lorsque la vitesse de rotation de la turbine est suffisante pour entraîner seule le compresseur à un régime réduit d'au moins 50% du régime nominal, de préférence au moins 70%. Inversement, le dispositif d'apport de puissance peut être configuré pour être activé lorsque la vitesse de rotation de la turbine est insuffisante pour entraîner seule le compresseur à un régime réduit d'au moins 50% du régime nominal, de préférence au moins 70%.

### BRÈVE DESCRIPTION DES DESSINS

L'invention et ses avantages seront mieux compris à la lecture de la description détaillée qui suit, de modes de réalisation donnés à titre d'exemples non limitatifs. Cette description se réfère aux dessins annexés, sur lesquels :
- la figure 1 est une représentation schématique d'un turboréacteur selon un mode de réalisation ;
- la figure 2 illustre schématiquement une demi-coupe axiale d'un turboréacteur selon un deuxième mode de réalisation ;
- la figure 3 illustre schématiquement une demi-coupe axiale d'un turboréacteur selon un troisième mode de réalisation ;
- la figure 4 illustre schématiquement une demi-coupe axiale d'un turboréacteur selon un quatrième mode de réalisation ;
- la figure 5 illustre schématiquement une demi-coupe axiale d'un turboréacteur selon un cinquième mode de réalisation.

### DESCRIPTION DÉTAILLÉE DE MODES DE RÉALISATION

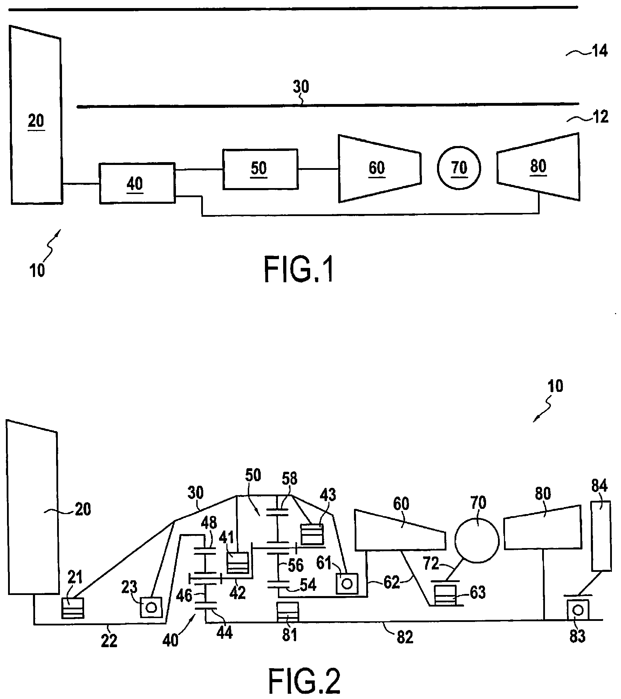

Un turboréacteur 10 selon un mode de réalisation est représenté schématiquement sur la figure 1. En l'occurrence, le turboréacteur 10 est un turboréacteur simple corps double flux. En effet, le turboréacteur 10 comprend une soufflante 20, un carter interne 30 disposé en aval de la soufflante 20 et séparant une veine primaire 12 d'une veine secondaire 14. Un compresseur 60, une chambre de combustion 70 et une turbine 80 sont agencés dans la veine primaire 12, de l'amont vers l'aval. Du fait que le turboréacteur 10 est à simple corps, il comporte un unique ensemble tournant comprenant le compresseur 60 et la turbine 80. En l'espèce, le turboréacteur comprend un unique compresseur 60 entraîné directement ou indirectement par une unique turbine 80, la turbine 80 étant mise en mouvement par les gaz de combustion issus de la chambre de combustion 70.

La soufflante 20 peut comprendre une roue d'aubes mobiles. La soufflante 20 peut être dimensionnée de sorte que son taux de compression en régime de croisière soit compris entre 1,3 et 1,45, à une vitesse de rotation d'environ 2600 tours par minute. Le diamètre de la soufflante 20 peut être compris entre 2 et 2,7 mètres, plus précisément entre 2,2 mètres et 2,4 mètres. Par diamètre de la soufflante 20, on comprendra ici la distance radiale entre l'axe du turboréacteur 10 et la tête des aubes de soufflante.

Le compresseur 60 peut comprendre entre cinq et quinze étages, notamment entre huit et douze étages, de préférence environ dix étages, chaque étage étant formé d'une roue d'aubes fixes et d'une roue d'aubes mobiles. On rappelle que les aubes mobiles des étages d'un même compresseur sont solidaires en rotation autour de l'axe du compresseur. Le compresseur peut être dimensionné de sorte que son taux de compression soit supérieur ou égal à vingt-cinq à une vitesse de rotation d'environ 15500 tours par minute, ce qui peut correspondre au régime de croisière.

Ainsi, dans ce mode de réalisation, l'OPR du turboréacteur 10 peut être supérieur ou égal à trente.

La turbine 80 peut comprendre entre deux et six étages, notamment entre trois et cinq étages, de préférence environ quatre étages. On rappelle que les aubes mobiles des étages d'une même turbine sont solidaires en rotation autour de l'axe de la turbine. La turbine peut être prévue pour tourner à environ 8600 tours par minute en régime de croisière.

Dans ce mode de réalisation, la turbine 80 entraîne en rotation le compresseur 60. La turbine 80 entraîne également en rotation la soufflante 20. Plus précisément, le turboréacteur 10 comprend une transmission différentielle couplée à la turbine 80. En l'espèce, comme illustré sur la figure 1, la transmission différentielle est couplée à la soufflante 20 et au compresseur 60 et comprend, ici, un premier réducteur 40 configuré pour modifier le rapport de transmission de vitesse de rotation entre la turbine 80 et la soufflante 20, et un deuxième réducteur 50 configuré pour modifier le rapport de transmission de vitesse de rotation entre la turbine 80 et le compresseur 60.

Dans ce mode de réalisation, le rapport de dilution entre la veine secondaire 14 et la veine primaire 12, aussi appelé BPR, est supérieur ou égal à douze, de préférence supérieur ou égal à quatorze, voire 14,5. Dans ce mode de réalisation, un tel BPR peut être atteint grâce au diamètre de la soufflante, au taux de compression de la soufflante, et au nombre d'étages de la turbine 80. Toutefois, d'autres paramètres pourraient être mis en jeu : par exemple, un BPR élevé peut être également atteint par l'augmentation conjointe de l'OPR et de la température d'entrée de la turbine, cette conjonction contribuant à réduire le débit massique de la veine primaire, donc augmenter le BPR.

Comme indiqué précédemment, dans le turboréacteur 10, le régime de rotation de la soufflante 20 peut être découplé de celui du compresseur 60. Par exemple, le rapport de la vitesse de rotation du compresseur 60 sur la vitesse de rotation de la soufflante 20 peut être compris entre 5,5 et 6,5 sur les points de pleine puissance. En outre, contrairement à un unique réducteur différentiel, l'utilisation de deux réducteurs permet d'alléger les contraintes mécaniques et aérodynamiques sur la turbine 80.

Les figures 2 à 5 présentent le turboréacteur 10 dans d'autres modes de réalisation. Sur ces figures, les éléments correspondant ou identiques à ceux du premier mode de réalisation recevront le même signe de référence et ne seront pas décrits à nouveau.

La figure 2 illustre de manière plus détaillée la structure du turboréacteur 10.

On note en premier lieu qu'en raison de la présence de la transmission différentielle, l'arbre de soufflante 22, l'arbre de compresseur 62 et l'arbre de turbine 82 sont distincts les uns des autres.

Comme représenté sur la figure 2, le premier réducteur 40 est un réducteur différentiel ayant une roue d'entrée 44, en l'occurrence un planétaire (aussi appelé planétaire 44), solidaire en rotation de la turbine 80, ici via un arbre de turbine 82, et une première roue de sortie 48, en l'occurrence une couronne (aussi appelée couronne 48), solidaire en rotation de la soufflante 20, ici via un arbre de soufflante 22. De préférence, le rapport R1 du nombre de dents de la première roue de sortie 48 sur le nombre de dents de la roue d'entrée 44 est supérieur à 1 et vaut, dans ce mode de réalisation, environ 1,5.

Le planétaire 44 et la couronne 48 sont en prise par l'intermédiaire de satellites 46. Il peut être prévu un ou plusieurs satellites 46. Au sens du présent exposé, l'expression « en prise » traduit un engagement réciproque de deux éléments, que cet engagement soit mécanique, électromagnétique ou d'une autre nature. Le porte-satellite 42 connecté au(x) satellite(s) 46 forme la deuxième roue de sortie du premier réducteur 40.

Par ailleurs, le deuxième réducteur 50 est un réducteur épicycloïdal. Comme indiqué précédemment, le deuxième réducteur 50 a une roue d'entrée solidaire en rotation de la deuxième roue de sortie 42 du premier réducteur 40. En l'occurrence, comme illustré sur la figure 2, le porte-satellite 42 forme à la fois la deuxième roue de sortie du premier réducteur 40 et la roue d'entrée du deuxième réducteur 50. Par suite, le porte-satellite 42 forme également un arbre de réduction entre le premier réducteur 40 et le deuxième réducteur 50. Par la suite, dans ce mode de réalisation, les termes suivants seront utilisés indifféremment : porte-satellite 42, arbre de réduction, deuxième roue de sortie du premier réducteur 40, roue d'entrée du deuxième réducteur 50. Toutefois, de manière générale, ces organes peuvent être distincts les uns des autres, auquel cas une sortie du premier réducteur 40 est couplée en rotation à une entrée du deuxième réducteur 50 par un arbre de réduction 42.

L'arbre de transmission 42 est un porte-satellite pour le premier réducteur 40 et, indépendamment, est aussi un porte-satellite pour le deuxième réducteur 50. Ainsi, le deuxième réducteur 50 comprend un ou plusieurs satellites 56 dont la révolution est causée par la rotation du porte-satellite 42.

Le deuxième réducteur 50 comprend, outre sa roue d'entrée 42, une roue de sortie 54, en l'occurrence un planétaire (aussi appelé planétaire 54), solidaire en rotation du compresseur 60, ici via un arbre de compresseur 62. Dans ce mode de réalisation, le planétaire 54 est en prise avec les satellites 56. Les satellites 56 peuvent par ailleurs être en prise avec une couronne 58, ici fixe par rapport au carter 30.

De préférence, le rapport R2 du nombre de dents de la couronne 58 du deuxième réducteur 50 sur le nombre de dents d'un satellite 56 est supérieur à 2 et vaut, dans ce mode de réalisation, environ 7.

Par ailleurs, dans ce mode de réalisation, le rapport R1 précité est inférieur au rapport R2.

Le deuxième réducteur peut être dimensionné pour avoir un rapport de transmission supérieur à 3, par exemple valant environ 8.

Comme il ressort de la figure 2, les premier et deuxième réducteurs 40, 50, sont coaxiaux.

Des paliers peuvent être prévus pour soutenir les arbres précités. Notamment, l'arbre de réduction 42 peut être soutenu par un palier 41 agencé entre le premier réducteur 40 et le deuxième réducteur 50, de façon à améliorer la situation dynamique de la transmission différentielle. Plus précisément, comme illustré sur la figure 2, le palier 41, en l'occurrence un palier à rouleaux, est agencé axialement entre le premier réducteur 40 et le deuxième réducteur 50, et radialement entre l'arbre de réduction 42 et le carter 30, pour soutenir l'arbre de réduction 42 par rapport au carter 30.

Au besoin, l'arbre de réduction 42 peut être soutenu par un deuxième palier 43. Le deuxième palier 43 peut être prévu à l'avant du premier réducteur 40 ou, comme représenté sur la figure 2, à l'arrière du deuxième réducteur 50. Le deuxième palier 43 peut être un palier à rouleaux. Le deuxième palier 43 peut être agencé radialement entre l'arbre de réduction 42 et le carter 30. Le deuxième palier 43 peut soutenir l'arbre de réduction 42 par rapport au carter 30.

Par ailleurs, l'arbre de soufflante 22, l'arbre de compresseur 62 et l'arbre de turbine 82 peuvent chacun, indépendamment les uns des autres, être soutenu par au moins un palier, ou, dans ce mode de réalisation, au moins deux paliers.

Selon un exemple, l'arbre de soufflante 22 est soutenu par rapport au carter 30 par un palier de soufflante avant 21 et un palier de soufflante arrière 23. Par ailleurs, selon un exemple, l'arbre de compresseur 62 est soutenu par un palier de compresseur avant 61 par rapport au carter 30, et par un palier de compresseur arrière 63 par rapport à un organe structural 72 en aval du compresseur, ici un carter de chambre de combustion. Par ailleurs, selon un exemple, l'arbre de turbine 82 est soutenu par un palier de turbine arrière 83 par rapport à un carter d'échappement 84, aussi connu sous le nom de « turbine rear frame » (TRF).

Par ailleurs, l'arbre de compresseur 62 peut être coaxial à l'arbre de turbine 82 et emmanché extérieurement sur l'arbre de turbine 62. Dans cette perspective, il peut être prévu un palier inter-arbre 81 agencé entre l'arbre de compresseur 62 et l'arbre de turbine 82, en particulier radialement entre ces deux arbres. Le palier inter-arbre 81 soutient l'arbre de compresseur 62 par rapport à l'arbre de turbine 82 et permet leur rotation relative.

Pour chacun de ces arbres 22, 62, 82, il peut être prévu que l'un des paliers assure un blocage axial de l'arbre, par exemple sous la forme d'un roulement à billes, tandis que l'autre des paliers permet un débattement axial de l'arbre, par exemple sous la forme d'un roulement à rouleaux, pour éviter l'hyperstatisme tout en maîtrisant la position axiale de l'arbre.

Dans cet exemple, le palier de soufflante avant 21 et le palier inter-arbre 81 sont des paliers à rouleaux, tandis que les paliers de soufflante et de turbine arrière 23, 83, sont des roulements à billes. Dans cet exemple, le palier de compresseur avant 61 est un roulement à billes, tandis que le palier de compresseur arrière est un palier à rouleaux.

On note que pour améliorer encore la dynamique, en l'occurrence en réduisant la longueur des arbres concernés 22, 62, 82 de sorte que leurs modes propres interviennent à des régimes plus élevés potentiellement en dehors du régime de fonctionnement du turboréacteur, il est possible de positionner les roulements à billes 23, 61 au plus près du carter d'entrée de la soufflante 20 et du compresseur 60, respectivement. Par exemple, il est possible de placer lesdits roulements aussi proches du carter d'entrée de la soufflante 20 et du compresseur 60, respectivement, que ce que permet la géométrie de ces carters.

Comme illustré sur la figure 2, le premier palier 41 soutenant l'arbre de réduction 42 peut être un palier dit « à haut rayon », c'est-à-dire dont le rayon est relativement proche de celui du carter 30 sur lequel il est fixé. En l'occurrence, ledit palier 41 est agencé radialement à l'extérieur de l'arbre de compresseur 62, de l'arbre de turbine 82 et de l'arbre de réduction 42.

On note que du fait de la structure simplifiée du turboréacteur 10, a fortiori pour un turboréacteur 10 à simple corps, la distance entre les paliers supportant un même arbre peut être réduite par rapport aux architectures plus complexes actuellement développées. Il s'ensuit une meilleure dynamique de rotation des composants du turboréacteur 10. De manière générale, la diminution du rapport longueur sur diamètre d'un arbre permet d'améliorer la dynamique de l'arbre.

Du point de vue de la masse, les inventeurs estiment le gain de masse entre 5% et 15% pour le turboréacteur 10 du deuxième mode de réalisation, par rapport à un moteur conventionnel à double corps double flux avec réducteur unique.

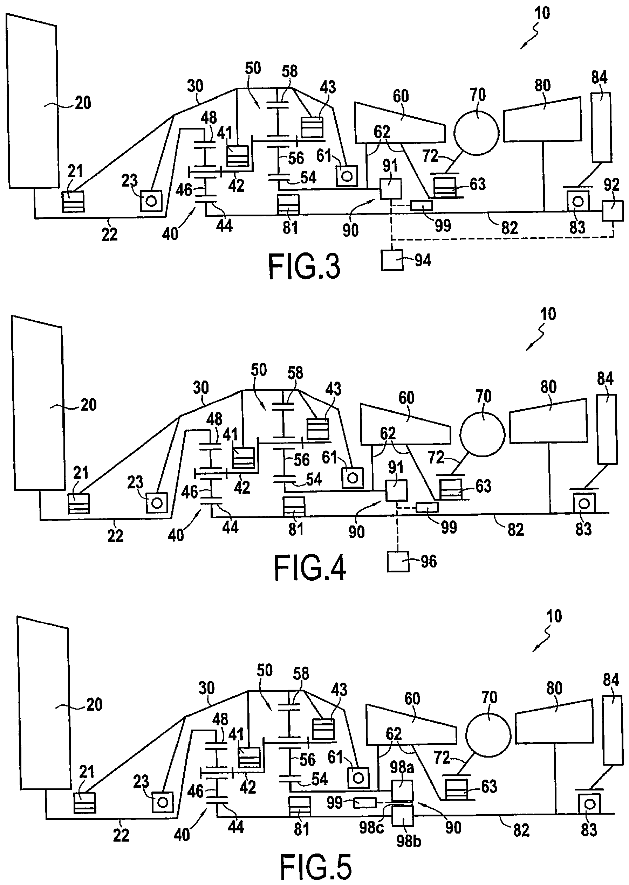

Dans les troisième à cinquième modes de réalisation, représentés sur les figures 3 à 5 respectivement, afin de diminuer le risque que le compresseur 60 se trouve à trop faible régime lorsque la turbine 80 tourne en régime ralenti ou plus généralement à un régime non nul mais faible, il peut être prévu un dispositif d'apport de puissance 90 configuré pour fournir une puissance additionnelle à celle fournie par la turbine 80 pour entraîner le compresseur 60. Bien entendu, un tel dispositif d'apport de puissance peut être compatible avec les modes de réalisations précédemment décrits.

Le dispositif d'apport de puissance peut être de nature diverse. Par exemple, le dispositif d'apport de puissance 90 peut être configuré pour fournir une puissance en provenance d'une source distincte de la turbine 80, ladite puissance n'étant donc pas fournie, directement ou indirectement, instantanément ou de manière différée, par la turbine 80. Typiquement, dans le troisième mode de réalisation, le dispositif d'apport de puissance 90 comprend un moteur électrique 91 configuré pour entraîner en rotation le compresseur 60. Comme illustré sur la figure 3, le moteur électrique 91 peut être en prise avec l'arbre de compresseur 62. L'énergie électrique du moteur électrique 91 peut provenir d'un générateur électrique 92 configuré pour être entraîné par la turbine 80, ou plus précisément par l'arbre de turbine 82, dans ce mode de réalisation.

Alternativement ou en complément, le dispositif d'apport de puissance 90 peut comprendre un connecteur 94 configuré pour être connecté à une alimentation électrique externe au turboréacteur et pour fournir au moteur électrique 91 l'énergie électrique nécessaire, étant entendu que la puissance additionnelle pour entraîner le compresseur 60 malgré le régime ralenti de la turbine 80 est utile essentiellement lorsque le turboréacteur 10 fonctionne en régime ralenti, au sol aussi bien qu'en vol, par exemple lors de la phase de descente.

Alternativement ou en complément, comme illustré sur la figure 4 en référence au quatrième mode de réalisation, l'énergie électrique destinée à alimenter le moteur électrique 91 peut provenir de moyens de stockage d'électricité 96 électriquement connectés au moteur électrique. Le cas échéant, les moyens de stockage d'électricité 96 peuvent être connectés au générateur électrique 92 ou au connecteur 94 illustrés dans le troisième mode de réalisation. Selon la configuration, les moyens de stockage d'électricité 96 peuvent faire office de tampon pour accumuler l'énergie produite par le générateur électrique 92 indépendamment de sa consommation par le moteur électrique 91.

Les moyens de stockage d'électricité 96 peuvent comprendre une ou plusieurs batteries, ou tout autre moyen de stockage adapté.

Toutefois, il n'est pas nécessaire que la puissance fournie par le dispositif d'apport de puissance 90 transite sous forme électrique. Dans le cinquième mode de réalisation, représenté sur la figure 5, le dispositif d'apport de puissance 90 comprend une transmission mécanique ou électromagnétique variable couplée d'une part à l'arbre 62 du compresseur 60, d'autre part à l'arbre 82 de la turbine 80. Plus précisément, le dispositif d'apport de puissance 90 comprend un premier élément d'engagement 98a solidaire en rotation de l'arbre de compresseur 62, un deuxième élément d'engagement 98b solidaire en rotation de l'arbre de turbine 82. Les premier et deuxième éléments d'engagement 98a, 98b peuvent être en prise l'un avec l'autre, de manière variable (ce qui inclut la possibilité de les découpler), au moyen d'une liaison 98c mécanique ou électromagnétique. Par exemple, la liaison 98c peut être un embrayage, un système différentiel, un coupleur électromagnétique ou toute autre transmission variable d'énergie mécanique.

Les troisième, quatrième et cinquième modes de réalisation ont ceci en commun que la puissance fournie au compresseur 60 par le dispositif d'apport de puissance 90 est variable et peut être commandée. A cet effet, il peut être prévu une unité de commande 99 configurée pour commander le dispositif d'apport de puissance 90. Par exemple, l'unité de commande 99 peut commander le dispositif d'apport de puissance en fonction d'une vitesse de rotation de la turbine 80 ou d'un autre paramètre représentatif du régime du turboréacteur 10. Par exemple, il peut être utile d'activer le dispositif d'apport de puissance 90 lorsque la turbine tourne à une vitesse inférieure ou égale à 95% de sa vitesse de rotation maximale nominale, et de désactiver le dispositif d'apport de puissance 90 pour une vitesse de rotation de la turbine supérieure à 95% de sa vitesse de rotation maximale nominale. Ainsi, même lorsque la turbine 80 est au ralenti, le compresseur 60 peut être maintenu dans un régime de rotation stable et offrant une bonne opérabilité, c'est-à-dire une capacité à maintenir les points de fonctionnement stabilisés et transitoires de la turbomachine à une distance suffisamment éloignée des zones d'instabilité aérodynamique.

Le dispositif d'apport de puissance 90 peut être dimensionné de sorte que la puissance additionnelle maximale fournie par le dispositif d'apport de puissance peut être supérieure à 1,5 Mégawatt (MW), de préférence supérieure ou égale à 1,8 MW, de préférence encore supérieure ou égale à 2,1 MW.

Bien que présenté pour augmenter le régime de rotation du compresseur 60 lorsque la turbine 80 tourne au ralenti, le dispositif d'apport de puissance 90 peut, incidemment, être utilisé comme assistance à l'accélération du turboréacteur 10, par exemple lors du démarrage ou lors de manœuvres transitoires rapides.

Par ailleurs, le dispositif d'apport de puissance peut être utilisé dans le cadre d'un turboréacteur à double corps et double flux, qui comprend, en plus du compresseur et de la turbine précités qui forment un corps haute pression, un compresseur basse pression ou booster et une turbine basse pression, positionnés de part et d'autre du corps haute pression et formant un corps basse pression. Le compresseur basse pression est entraîné par la turbine basse pression. Par exemple, le dispositif d'apport de puissance peut être utilisé pour apporter de la puissance sur l'arbre haute pression afin d'améliorer l'opérabilité du compresseur haute pression en abaissant sa ligne de fonctionnement, qui est définie classiquement comme le lieu des points décrits dans le compresseur dans un système de coordonnées [taux de compression ; débit massique réduit], au cours de toutes les conditions possibles de fonctionnement du moteur, en particulier entre le plein gaz et le ralenti. Lorsque le dispositif d'apport de puissance est utilisé, la puissance apportée peut être prélevée sur l'arbre basse pression, ce qui améliore l'opérabilité du compresseur basse pression en abaissant sa ligne de fonctionnement.

Bien que la présente description se réfère à des exemples de réalisation spécifiques, des modifications peuvent être apportées à ces exemples sans sortir de la portée générale de l'invention telle que définie par les revendications. Par conséquent, la description et les dessins doivent être considérés dans un sens illustratif plutôt que restrictif.

## Revendications

1. Turboréacteur (10) comprenant une soufflante (20), un compresseur (60), une chambre de combustion (70), et une turbine (80) configurée pour entraîner en rotation la soufflante (20) via un premier réducteur (40) et le compresseur (60) via un deuxième réducteur (80), dans lequel une sortie du premier réducteur (40) est couplée en rotation à une entrée du deuxième réducteur (50) par un arbre de réduction (42), **caractérisé en ce que** l'arbre de réduction (42) est soutenu par un palier (41) agencé entre le premier réducteur (40) et le deuxième réducteur (50).

2. Turboréacteur selon la revendication 1, dans lequel le palier (41) est un palier à rouleaux.

3. Turboréacteur selon la revendication 1 ou 2, dans lequel le turboréacteur (10) est un turboréacteur à double flux comprenant un carter (30) disposé en aval de la soufflante (20) et séparant une veine primaire (12) d'une veine secondaire (14), et le palier (41) est soutenu par ledit carter (30).

4. Turboréacteur selon la revendication 3, comprenant en outre un palier de soufflante (21, 23) agencé entre l'arbre (22) de la soufflante (20) et le carter (30).

5. Turboréacteur selon la revendication 3 ou 4, comprenant un palier de compresseur (61) agencé entre l'arbre de compresseur (62) et le carter (30).

6. Turboréacteur selon l'une quelconque des revendications 1 à 5, comprenant un deuxième palier (43), tel qu'un palier à rouleaux, agencé pour soutenir l'arbre de réduction (42).

7. Turboréacteur selon l'une quelconque des revendications 1 à 6, comprenant un palier inter-arbre (81) agencé entre l'arbre de compresseur (62) et l'arbre de turbine (82).

8. Turboréacteur selon l'une quelconque des revendications 1 à 7, dans lequel ledit palier (41) est agencé radialement à l'extérieur de l'arbre de compresseur (62), de l'arbre de turbine (82) et de l'arbre de réduction (42).

9. Turboréacteur selon l'une quelconque des revendications 1 à 8, comprenant un palier de compresseur (63) agencé entre l'arbre de compresseur (62) et un organe structural (72) en aval du compresseur (60).

10. Turboréacteur selon l'une quelconque des revendications 1 à 9, dans lequel l'arbre de réduction (42) est un porte-satellite commun au premier réducteur (40) et au deuxième réducteur (50).

## Patentansprüche

1. Turbostrahltriebwerk (10), umfassend ein Gebläse (20), einen Kompressor (60), eine Brennkammer (70) und eine Turbine (80), die dazu ausgelegt ist, das Gebläse (20) über ein erstes Untersetzungsgetriebe (40) und den Kompressor (60) über ein zweites Untersetzungsgetriebe (80) drehend anzutreiben, wobei ein Ausgang des ersten Untersetzungsgetriebes (40) durch eine Untersetzungswelle (42) mit einem Eingang des zweiten Untersetzungsgetriebes (50) drehgekoppelt ist,
**dadurch gekennzeichnet, dass** die Untersetzungswelle (42) durch ein Lager (41) getragen ist, das zwischen dem ersten Untersetzungsgetriebe (40) und dem zweiten Untersetzungsgetriebe (50) angeordnet ist.

2. Turbostrahltriebwerk nach Anspruch 1, bei dem das Lager (41) ein Rollenlager ist.

3. Turbostrahltriebwerk nach Anspruch 1 oder 2, bei dem das Turbostrahltriebwerk (10) ein Zweistrom-Turboluftstrahltriebwerk ist, das ein Gehäuse (30) umfasst, welches stromabwärts des Gebläses (20) angeordnet ist und einen Primärstrom (12) von einem Sekundärstrom (14) trennt, und das Lager (41) von dem Gehäuse (30) getragen ist.

4. Turbostrahltriebwerk nach Anspruch 3, das ferner ein Gebläselager (21, 23) umfasst, welches zwischen der Welle (22) des Gebläses (20) und dem Gehäuse (30) angeordnet ist.

5. Turbostrahltriebwerk nach Anspruch 3 oder 4, das ein Kompressorlager (61) umfasst, welches zwischen der Kompressorwelle (62) und dem Gehäuse (30) angeordnet ist.

6. Turbostrahltriebwerk nach einem der Ansprüche 1 bis 5, das ein zweites Lager (43), wie ein Rollenlager umfasst, welches dazu eingerichtet ist, die Untersetzungswelle (42) zu tragen.

7. Turbostrahltriebwerk nach einem der Ansprüche 1 bis 6, das ein Zwischenwellenlager (81) umfasst, welches zwischen der Kompressorwelle (62) und der Turbinenwelle (82) angeordnet ist.

8. Turbostrahltriebwerk nach einem der Ansprüche 1 bis 7, bei dem das Lager (41) radial außerhalb der Kompressorwelle (62), der Turbinenwelle (82) und der Untersetzungswelle (42) angeordnet ist.

9. Turbostrahltriebwerk nach einem der Ansprüche 1 bis 8, das ein Kompressorlager (63) umfasst, welches zwischen der Kompressorwelle (62) und einem Strukturelement (72) stromabwärts des Kompressors (60) angeordnet ist.

10. Turbostrahltriebwerk nach einem der Ansprüche 1 bis 9, bei dem die Untersetzungswelle (42) ein dem ersten Untersetzungsgetriebe (40) und dem zweiten Untersetzungsgetriebe (50) gemeinsamer Planetenträger ist.

## Claims

1. A turbojet engine (10) comprising a fan (20), a compressor (60), a combustion chamber (70) and a turbine (80) configured to rotatably drive the fan (20) via a first reduction gear (40) and the compressor (60) via a second reduction gear (80), wherein an outlet of the first reduction gear (40) is rotatably coupled to an inlet of the second reduction gear (50) by a reduction shaft (42), **characterized in that** the reduction shaft (42) is supported by a bearing (41) arranged between the first reduction gear (40) and the second reduction gear (50).

2. The turbojet engine according to claim 1, wherein the bearing (41) is a roller bearing.

3. The turbojet engine according to claim 1 or 2, wherein the turbojet engine (10) is a turbofan engine comprising a casing (30) disposed downstream of the fan (20) and separating a primary flowpath (12) from a secondary flowpath (14), and the bearing (41) is supported by said casing (30).

4. The turbojet engine according to claim 3, further comprising a fan bearing (21, 23) arranged between the shaft (22) of the fan (20) and the casing (30).

5. The turbojet engine according to claim 3 or 4, comprising a compressor bearing (61) arranged between the compressor shaft (62) and the casing (30).

6. The turbojet engine according to any one of claims 1 to 5, comprising a second bearing (43), such as a roller bearing, arranged to support the reduction shaft (42).

7. The turbojet engine according to any one of claims 1 to 6, comprising an inter-shaft bearing (81) arranged between the compressor shaft (62) and the turbine shaft (82).

8. The turbojet engine according to any one of claims 1 to 7, wherein said bearing (41) is arranged radially outside the compressor shaft (62), the turbine shaft (82) and the reduction shaft (42).

9. The turbojet engine according to any one of claims 1 to 8, comprising a compressor bearing (63) arranged between the compressor shaft (62) and a structural member (72) downstream of the compressor (60).

10. The turbojet engine according to any one of claims 1 to 9, wherein the reduction shaft (42) is a planet carrier common to the first reduction gear (40) and to the second reduction gear (50).
